(19) Europäisches Patentamt
European Patent Office
Office européen des brevets

(11) EP 0 722 964 A1

(12) **EUROPÄISCHE PATENTANMELDUNG**

(43) Veröffentlichungstag:
**24.07.1996 Patentblatt 1996/30**

(51) Int Cl.$^6$: **C08G 59/12**, C08L 63/00, C08L 67/00

(21) Anmeldenummer: **95810787.2**

(22) Anmeldetag: **13.12.1995**

(84) Benannte Vertragsstaaten:
**CH DE ES FR GB IT LI NL**

(30) Priorität: **22.12.1994 CH 3897/94**

(71) Anmelder: **CIBA-GEIGY AG**
**4002 Basel (CH)**

(72) Erfinder: **Beisele, Christian**
**CH-4053 Basel (CH)**

(54) **Epoxidgruppenterminierte Polyester enthaltendes Epoxidharzgemisch**

(57) Ein härtbares Epoxidharzgemisch, enthaltend

a) 40 bis 100 Gew.-% eines epoxidgruppenterminierten Polyesters aus einer dimerisierten oder trimerisierten Fettsäure und einem mehrwertigen Alkohol und 0 bis 60 Gew.-% einer vom epoxidgruppenterminierten Polyester verschiedenen Diepoxidverbindung,

b) ein Epoxidharzhärtungsmittel aus 50 bis 99 Gew.-% eines Polyoxyalkylendi- oder -triamins und 1 bis 50 Gew.-% eines von Polyoxyalkylenaminen verschiedenen Härtungsmittels und gegebenenfalls

c) einen Härtungsbeschleuniger und

d) übliche Zusatzmittel für Giessharze auf Basis von Epoxidharzen, wobei die Summe der Bestandteile sowohl in der Komponenten a) als auch in der Komponente b) jeweils 100 Gew.-% beträgt,

eignet sich vorzugsweise als Giessharzmasse zum Umhüllen von elektrischen oder elektronischen Bauteilen.

EP 0 722 964 A1

## Beschreibung

Die Erfindung betrifft ein härtbares Epoxidharzgemisch aus bestimmten langkettigen epoxidgruppenterminierten Polyestern und Polyalkylendi- oder -triaminen sowie dessen Verwendung zum Umhüllen von elektrischen und elektronischen Bauteilen.

Härtbare Epoxidharzgemische, die als Giessharzmassen zum Umhüllen von elektrischen oder elektronischen Bauteilen verwendet werden können, sind bekannt. An solche Umhüllungsmassen werden grosse Anforderungen insbesondere bezüglich der Wärmealterung und der Flexibilität bei verschiedenen Temperaturen gestellt.

Im US-Patent 3,299,169 wird ein flexibles Epoxidharzgemisch offenbart, worin der Diglycidylether eines Diphenols mit einem Diglycidylether eines Polyalkylenglykols modifizert ist und als Härtungsmittel ein niedermolekulares Polyoxyalkylendiamin verwendet wird. Die aus solchen Epoxidharzgemischen durch Härtung hergestellten Form stoffe weisen vergleichsweise nur eine geringe Flexibilität auf.

Desgleichen wird im US-Patent 3,929,717 eine Umhüllungsmasse aus einem Diglycidylether eines Diphenols, einem Diglycidylether eines Polyalkylenglykols und einem Polyoxyalkylendiamin beschrieben, welche zusätzlich noch primäre oder sekundäre Akyl-, Aryl- oder Alkanolamine enthalten, um eine bessere Alkohollöslichkeit der Umhüllungsmasse zu erreichen. Auch diese härtbaren Epoxidharzgemische ergeben Formstoffe mit einer vergleichsweise geringen Flexibilität.

Im US-Patent 4,866,108 werden Klebstoffzusammensetzungen auf Basis des Diglycidylesters der dimerisierten Linolsäure und eines Adduktes aus 2 Mol Bisphenol A-diglycidylether und 1 Mol dimerisierter Linolsäure offenbart, die ausserdem zusätzlich noch Weichmacher enthalten. Polyester auf Basis von Linolsäure werden in diesen Zusammensetzungen weder eingesetzt noch dem Fachmann irgendwie nahegelegt.

Es wurde nun gefunden, dass man flexible Formstoffe auf Basis von modifizierten Epoxidharzen erhält, die über einen grossen Temperaturbereich, insbesondere bei tiefen Temperaturen, ihre Flexibilität beibehalten und auch hohe Anforderungen an die Alterungsbeständigkeit erfüllen, wenn man als Epoxidharz einen epoxidgruppenterminierten Polyester aus einer di- oder trimerisierten Fettsäure und einem mehrwertigen Alkohol und als Epoxidharzhärtungsmittel ein Gemisch aus einem Polyoxyalkylendi- oder -triamin und einem von den Polyoxyalkylenaminen verschiedenen Härtungsmittel verwendet.

Gegenstand vorliegender Erfindung ist somit ein härtbares Epoxidharzgemisch, enthaltend

a) 40 bis 100 Gew.-% eines epoxidgruppenterminierten Polyesters aus einer dimerisierten oder trimerisierten Fettsäure und einem mehrwertigen Alkohol und 0 bis 60 Gew.-% einer vom epoxidgruppenterminierten Polyester verschiedenen Diepoxidverbindung,

b) ein Epoxidharzhärtungsmittel aus 50 bis 99 Gew.-% eines Polyoxyalkylendi- oder -triamins und 1 bis 50 Gew.-% eines von Polyoxyalkylenaminen verschiedenen Härtungsmittels und gegebenenfalls

c) einen Härtungsbeschleuniger und

d) übliche Zusatzmittel für Giessharze auf Basis von Epoxidharzen, wobei die Summe der Bestandteile sowohl in der Komponenten a) als auch in der Komponente b) jeweils 100 Gew.-% beträgt.

Die in den erfindungsgemässen Epoxidharzgemischen enthaltene Komponente a) stellt eine bekannte Verbindungsklasse dar und umfasst beispielsweise die Anlagerungsaddukte von Diepoxidverbindungen an die carboxylterminierten Polyester. Solche Addukte auf Basis von Diglycidylverbindungen und carboxylterminierten Polyestern aus dimerisierter monomerer ungesättigter Fettsäure und Alkandiolen sowie deren Herstellung werden beispielsweise im US-Patent 3,816,365 beschrieben. Epoxidgruppenhaltige Addukte aus cycloalphatischen Diepoxiden, die mindestens eine an einem carbocyclischen Fünf- oder Sechsring sitzende 1,2-Epoxidgruppe aufweisen, wie beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat, und den carboxylterminierten Polyestern aus dimerisierter monomerer ungesättigter Fettsäure und Alkandiolen sowie deren Herstellungen werden im US-Patent 3,642,674 näher beschrieben. Diese epoxidgruppenhaltigen Addukte können im allgemeinen hergestellt werden, indem man 1 Mol des carboxylgruppenterminerten Polyesters mit 2 Mol der Diepoxidverbindung bei erhöhter Temperatur umsetzt.

Vorzugsweise enthalten die erfindungsgemässen Epoxidharzgemische als Komponente a) ein epoxidgruppenhaltiges Addukt aus einer Diglycidylverbindung und einem carboxylgruppenterminierten Polyester der Formel I

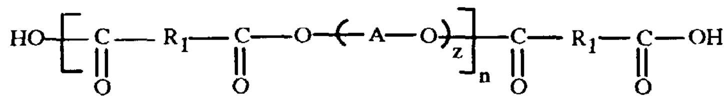 (I),

worin

$R_1$ den Kohlenwasserstoffrest einer ungesättigten oder gesättigten aliphatisch-cycloaliphatischen Dicarbonsäure bedeutet, welche durch Dimerisierung einer ungesättigten monomeren Fettsäure mit 14 bis 24 C-Atomen, vorzugsweise 16 bis 18 C-Atomen, im Molekül und gegebenenfalls anschliessender Hydrierung einer solchen dimerisierten Fettsäure erhalten wurde,
A einen geradkettigen oder verzweigten Alkylenrest mit 2 bis 18 C-Atomen,
z die Zahl 1 oder 2 und
n eine ganze Zahl von 1 bis 20, vorzugsweise 2 bis 6, bedeuten.

Für die Herstellung der epoxidgruppenhaltigen Addukte können als Diglycidylverbindungen die in der Epoxidharztechnik üblichen Epoxidharze verwendet werden, wie beispielsweise:

I) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen.
Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
Weiterhin können aromatische Polycarbonsäuren Verwendung finden, wie beispielsweise Phthalsäure, Isophthalsäure oder Terephthalsäure.

II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.
Die Glycidylether dieses Typs leiten sich beispielsweise von acyclischen Alkoholen ab, wie von Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen. Sie leiten sich aber auch beispielsweise von cycloaliphatischen Alkoholen, wie 1,4-Cyclohexandimethanol, Bis-(4-hydroxycyclohexyl)-methan oder 2,2-Bis-(4-hydroxycyclohexyl)-propan, ab oder sie besitzen aromatische Kerne, wie N,N-Bis-(2-hydroxyethyl)-anilin oder p,p'-Bis-(2-hydroxyethylamino)-diphenylmethan.
Die Glycidylether können sich auch von einkerningen Phenolen ableiten, wie beispielsweise von Resorcin oder Hydrochinon, oder sie basieren auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder $C_1$-$C_9$-Alkylgruppen substituiert sind, wie beispielsweise 4-Chlorphenol, 2-Methylphenol, oder 4-tert.-Butylphenol oder durch Kondensation mit Bisphenolen, solche der oben genannten Art.

III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)-methan, m-Xylylendiamin oder Bis-(4-methylaminophenyl)-methan. Zu den Poly-(N-glycidyl)-verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)-propan.

Die oben genannten Epoxidverbindungen sind bekannt und zum Teil im Handel erhältlich.

Bevorzugt werden in den erfindungsgemäss zu verwendeden Addukten als Diglycidylverbindung die Diglycidylether von zweiwertigern Phenolen und aliphatischen Diolen, wie beispielsweise der Butandioldiglycidylether oder ein Polyoxypropylendiglycidylether, eingesetzt.

Die für die Herstellung der carboxylgruppenterminierten Polyester der Formel I verwendeten aliphatisch-cycloaliphatischen Dicarbonsäuren werden durch Dimerisation von monomeren Fettsäuren mit genügend funktionsfähigen Doppelbindungen sowie von trocknenden oder halbtrocknenden Ölen abgeleiteten Fettsäuren erhalten.

Als derartige monomere Fettsäuren kommen solche in Betracht, die 14 bis 24 C-Atome, vorzugsweise 16 bis 18 C-Atome, im Molekül enthalten und wenigstens eine reaktionsfähige Doppelbindung in Molekül aufweisen , wie zum Beispiel Ölsäure, Linolsäure, Linolensäure, Ricenensäure sowie auch Hydroxylgruppen enthaltende Fettsäuren, wie

beispielsweise Ricinusölsäure.

Als geeignete trocknende oder halbtrocknende Öle, von denen sich derartige Fettsäuren ableiten, seien beispielsweise genannt: Baumwollsaatöl, Rüböl; Safloröl, Sesamöl, Sonnenblumenöl, Sojaöl, Tungöl, Leinöl, Oiticicaöl und Perillaöl.

Bei den bekannten Dimerisationsverfahren zur Herstellung der aliphatisch-cycloaliphatischen Dicabonsäuren reagieren die Fettsäuren, die vorwiegend nur eine Doppelbindung im Molekül enthalten, zum grössten Teil unter Bildung eines Säuregemisches, welches hauptsächlich aus dimeren, zum geringen Anteil auch aus trimeren oder höhermolekularen Anteilen besteht. Aus Fettsäuren mit vorwiegend mehr als einer Doppelbindung im Molekül wird beim Dimerisationsverfahren ein höherer Anteil an trimerisierten oder polymerisaierten Fettsäuren erhalten.Die monomeren, nicht genügend funktionsfähigen Säuren werden aus dem Reaktionsgemisch durch Destillation entfernt.

Die durch Dimerisation erhaltenen, bis zu einem gewissen Grad ungesättigten aliphatisch-cycloaliphatischen Dicarbonsäuren können direkt oder nach erfolgter Hydrierung zur Herstellung der carboxylgruppenterminierten Polyester verwendet werden.

Als für die Herstellung der carboxylgruppenterminierten Polyester dabei bevorzugt verwendeten Diole der Formel II

$$HO\!-\!(A-O)_z\!-\!H \quad \text{(II)},$$

worin A und z die gleiche Bedeutung wie in Formel I haben, seien insbesondere genannt: Ethylenglykol, Diethylenglykol, 1,2-Propandiol, 1,3-Propandiol, Dipropylenglykol, 1,4-Butadiol, 2,3-Butadiol, 1,5-Pentandiol, Neopentylglykol, 1,6-Hexandiol, 1,8-Octandiol, 1,10-Decandiol, 1,12-Dodecandiol, 1,6-Dihydroxy,2,2,4-trimethylhexan und 1,6-Dihydroxy-2,4,4-trimethylhexan.

Zur Herstellung der carboxylgruppenterminierten Polyester der Formel I kann man selbstverständlich auch Gemische der oben genannten Diole sowie auch Gemische der dimerisierten Fettsäuren verwenden.

Es ist ebenfalls möglich, bei der Herstellung der carboxylgruppenterminierten Polyester ausserdem kleine Anteile von tri- oder polyvalenten Komponenten, wie Hexantriol, trimerisierte Fettsäure, Tri- oder Tetracarbonsäure oder deren Anhydride, wie Trimellithsäureanhydrid oder Pyromellithsäureanhydrid, einzusetzen.

Die Herstellung der epoxidgruppenhaltigen Addukte erfolgt im allgemeinen durch einfaches Zusammenschmelzen der Polyepoxidverbindung mit dem carboxylgruppenhaltigen Polyester der Formel I in den vorgeschriebenen stöchiometrischen Mengen. Vorzugsweise setzt man aber einen Überschuss an der Polyepoxidverbindung ein und erhält somit ein Gemisch aus dem epoxidgruppenhaltigen Addukt und der Polyepoxidverbindung. In der Regel arbeitet man dabei im Temperaturintervall von 100 bis 200°C, vorzugsweise von 130 bis 180°C.

Als Diepoxidverbindungen, die vom epoxidgruppenterminierten Polyester verschieden sind, verwendet man die in der Epoxidharztechnik üblichen Epoxidharze, wie beispielsweise die oben aufgeführten, zur Herstellung der epoxidgruppenhaltigen Addukte verwendeten Epoxidharze.

Die in den erfindungsgemässen Epoxidharzgemischen als Komponente b) verwendeten Polyoxyalkylendi- und triaminen sind bekannt und zum Teil im Handel erhältlich. Als Polyoxyalkylendiamine werden vorzugsweise Verbindungen der Formel III oder IV eingesetzt

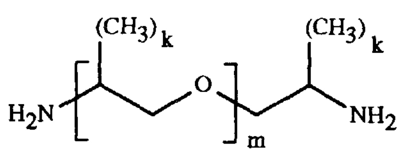

(III)

oder

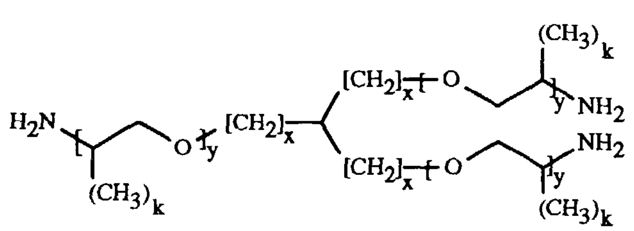

(IV),

worin jedes k unabhängig voneinander null oder die Zahl 1 ist, m für eine Zahl von 2 bis 70 steht, jedes x unabhängig voneinander für null oder die Zahl 1 steht und jedes y unabhängig voneinander eine Zahl von 2 bis 50 bedeutet.

Langkettige Polyoxyalkylenketten in den genannten Polyaminen können auch verzweigt sein und somit mehr als zwei bzw. 3 Aminogruppen im Molekül aufweisen.

Bestimmte Polyoxyalkylenamine der oben angegebenen Formel sind unter der Bezeichnung Jeffamine® der Firma Texaco Chemical Co. kommerziell erhältlich.

Vorzugweise enthalten die erfindungsgemässen Epoxidharzgemische als Polyoxyalkylenamin ein Polyoxypropylendiamin oder ein Polyoxyethylendiamin, insbesondere ein Polyoxypropylendiamin der Formel V

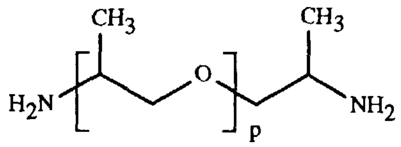 (V),

wobei p eine Zahl von 6 bis 40 ist.

Als Epoxidharzhärtungsmittel der Komponente b), das von den Polyoxyalkylenaminen verschieden ist, können im Prinzip alle üblichen Härtungsmittel für Epoxidharze eingesetzt werden, die mit den Polyoxyalkylenaminen nicht reagieren, wie beispielsweise Dicyandiamid, Polyamine sowie Polyole.

Als Polyamine können für die erfindungsgemässen härtbaren Epoxidharzgemische aliphatische, cycloaliphatische, aromatische oder heterocyclische Amine eingesetzt werden, wie beispielsweise Ethylendiamin, Propan-1,2-diamin, Propan-1,3-diamin, N,N-Diethylethylendiamin, Hexamethylendiamin, Diethylentriamin, Triethylentetramin, Tetraethylenpentamin, N-(2-Hydroxyethyl)-, N-(2-Hydroxypropyl)- und N-(2-Cyanoethyl)-diethyltriamin, 2,2,4-Trimethylhexan-1,6-diamin, 2,3,3,-Trimethylhexan-1,6-diamin, N,N-Dimethyl- und N,N-Diethylpropan-1,3-diamin, Ethanolamin, m- und p-Phenylendiamin, Bis-(4-aminophenyl)-methan, Anilin-Formaldehyd-Harze, Bis-(4-aminophenyl)-sulfon, m-Xylylendiamin, Bis-(4-aminocyclohexyl)-methan, 2,2-Bis-(4-aminocyclohexyl)-propan, 2,2-Bis-(4-amino-3-methylcyclohexyl)-propan, 3-Aminomethyl-3,5,5-trimethylcyclohexylamin (Isophorondiamin) und N-(2-Aminoethyl)-piperazin sowie als Polyaminoamide beispielsweise solche aus aliphatischen Polyaminen und dimerisierten oder trimerisierten Fettsäuren und ferner Polyamine der Formel

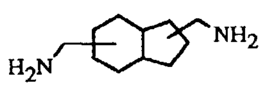 ,

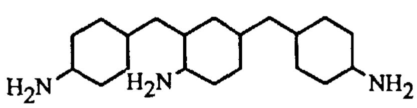 , 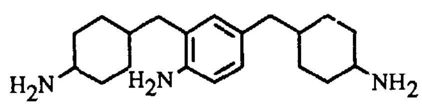 ,

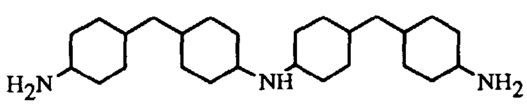 oder 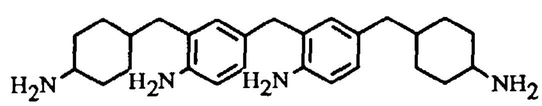

sowie Gemische dieser Aminoverbindungen.

Als Polyamine können für die erfindungsgemässen härtbaren Epoxidharzgemische auch die aminogruppenhaltigen Addukte, die bekanntlich durch Anlagerung von Aminen an Polyepoxidverbindungen oder die aminogruppenterminierten Polyamide einsetzen, die ebenfalls bekannte Verbindungen darstellen.

Als aliphatische Polyole für die erfindungsgemässen härtbaren Epoxidharzgemische eignen sich beispielsweise Ethylenglykol, Diethylenglykol und höhere Poly-(oxyethylen)-glykole, Propan-1,2-diol oder Poly-(oxypropyien)-glykole, Propan-1,3-diol, Butan-1,4-diol, Poly-(oxytetramethylen)-glykole, Pentan-1,5-diol, Hexan-1,6-diol, Hexan-2,4,6-triol, Glycerin, 1,1,1-Trimethylolpropan, Pentaerythrit oder Sorbit.

Als aromatische Polyole können für die erfindungsgemässen härtbaren Epoxidharzgemishe beispielsweise einkernige Phenole, wie Resorcin, Hydrochinon, N,N-Bis-(2-hydroxyethyl)-anilin, oder mehrkernige Phenole, wie p,p'-Bis-(2-hydroxyethylamino)-diphenylmethan, Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie Novolake, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder $C_1$-$C_9$-Alkylgruppen substituiert sind, wie beispielsweise 4-Chlorphenol, 2-Methylphenol, oder 4-tert.-Butylphenol oder durch Kondensation mit Bisphenolen, solche der oben genannten Art, eingesetzt werden.

Gewünschtenfalls können die erfindungsgemässen Epoxidharzgemische auch geeignete Härtungsbeschleuniger enthalten. Beispielsweise können bei Verwendung von Dicyandiamid, Polycarbonsäuren und deren Anhydriden als Beschleuniger tertiäre Amine oder deren Salze, quaternäre Ammoniumverbindungen oder Alkalimetallalkoxide verwendet werden.

Die Menge des eingesetzten Härtungsmittels richtet sich nach der chemischen Natur des Härtungsmittels und nach den gewünschten Eigenschaften der härtbaren Mischung und des gehärteten Produktes. Die maximale Menge kann leicht ermittelt werden. Wenn das Härtungsmittel ein Amin ist, werden normalerweise 0,75 bis 1,25 Äquivalente Aminwasserstoff pro 1 Epoxidäquivalent eingesetzt. Wenn Polycarbonsäuren oder ihre Anhydride eingesetzt werden, verwendet man gewöhnlich 0,4 bis 1,1 Äquivalente Carboxylgruppe bzw. Anhydridgruppe pro 1 Epoxidäquivalent. Bei der Verwendung von Polyphenolen als Härtungsmittel setzt man 0,75 bis 1,25 phenolische Hydroxylgruppen pro 1 Epoxidäquivalent ein. Katalytisch wirkende Härtungsmittel werden allgemein in Mengen von 1 bis 40 Gewichtsteilen pro 100 Gewichtsteile Epoxidharz eingesetzt.

Ausserdem können den erfindungsgemässen Epoxidharzgemische gewünschtenfalls noch die in der Epoxidharztechnik für Giessharze üblichen Zusatzmittel zugegeben werden. Solche üblichen Zusatzmittel sind beispielsweise Füllstoffe, wie Glas- oder Metallpulver, mineralische Füllstoffe, wie $Al_2O_3 \cdot nH_2O$, Silikate, Calcit, Dolomit oder Quarz, Farbstoffe, Pigmente, wie Titandioxid oder Russ, Verarbeitungshilfsmittel, wie Gleitmittel, Verlaufmittel, Thixotropiermittel, Stabilisatoren, Flammhemmer, Haftvermittler zwischen Füllstoffen und Harz oder Formtrennmittel.

Beim Zusatz der üblichen Zusatzmitteln zu den erfindungsgemässen Epoxidharzgemischen richtet sich die Menge der Zusatzmitteln nach dem spezifischen Anwendungszweck der erfindungsgemässen Gemischen.

Die erfindungsgemässen Gemische werden nach an sich bekannten Methoden, wie mit Hilfe bekannter Mischaggregate, beispielsweise Rührer, Kneter oder Walzen, hergestellt.

Die Härtung der erfindungsgemässen Gemische zu Formkörpern, Beschichtungen oder dergleichen erfolgt in für die Epoxidharztechnik üblicher Weise durch Erhitzen, wie sie beispielsweise im "Handbook of Epoxy Resins", 1967, von H. Lee und K.Neville beschrieben wird. Im allgemeinen liegt die Härtungstemperatur zwischen 50 und 200°C, vorzugsweise zwischen 80 und 130°C.

Die erfindungsgemässen Gemische eignen sich beispielsweise als Laminierharze oder Beschichtungsmassen, vorzugsweise als Giessharze sowie insbesondere als Umhüllungssysteme für elektrische und elektronische Bauteile, besonders solchen, die wechselnden Temperaturen ausgesetzt sind. Wie eingangs erwähnt, zeichnen sich die aus dem erfindungsgemässen härtbaren Epoxidharzgemischen hergestellten Formstoffe und Beschichtungen durch eine gute Flexibilität über einen relativ grossen Temperaturbereich aus, insbesondere bei tiefen Temperaturen.

Gegenstand vorliegener Erfindung ist daher auch die Verwendung der erfindungsgemässen Epoxidharzgemische als Giessharze und zum Umhüllen von elektrischen und elektronischen Bauteilen.

Epoxidharz A:

1040 g einer dimerisierten Fettsäure mit einem mittleren MG ($\overline{M}_w$) von etwa 600 (Pripol® 1022 der Firma Unichema) und 144 g Diethylenglykol werden unter Rühren und einer Stickstoffatmosphäre auf 100°C erhitzt. Nach Zusatz von 0,64 g Kaliumcarbonat wird das Reaktionsgemisch auf 25 Torr evakuiert, und das entstehende Reaktionswasser wird abdestilliert. Dann wird das Reaktiongemisch auf 155°C erhitzt und 3 h bei 155°C/25 Torr umgesetzt. Nach dem Abkühlen auf 60°C werden 800 g Bisphenol-A-diglycidylether, 324 g Butandioldiglycidylether und 0,4 g einer 30%-igen Natriummethanolatlösung in Methanol zugegeben. Das Reaktionsgemisch wird erst 30 Minuten (min) bei 100°C und dann 2 h bei 145°C umgestzt. Dann werden weitere 120 g Bisphenol A-diglycidylether sowie 130 g Polypropylenglykoldiglycidylether mit einem $\overline{M}_w$ von 400 dem Reaktiongemisch zugegeben, das anschliessend noch 1 h bei 110°C erhitzt wird. Nach dem Abkühlen wird das Reaktionsprodukt filtriert, und man erhält einen epoxidgruppenterminierten Polyester mit einem Epoxidäquivalentgewicht von 360.

Beispiel

In einem Rundkolben werden 475 g eines Polyoxypropylendiamins mit einem $\overline{M}_w$ von 2000, erhältlich im Handel unter der Bezeichnung Jeffamin®D 2000 von der Firma Texaco, und 25 g Diethylentriamin eingewogen. Das Gemisch wird anschliessend 15 min kräftig gerührt. Es entsteht eine Flüssigkeit mit einem Aminäquivalentgewicht von 220. Von diesem flüssigen Epoxidharzhärter werden 60 Gew.-Teile mit 100 Gew.-Teilen Epoxidharz A gemischt und 3 Stunden (h) bei 80°C ausgehärtet. An den erhaltenen Formstoffen werden folgende Eigenschaften gemessen:

| | |
|---|---|
| $T_g$ (DSC*)) TA 4000 (Mettler) | = -50°C |
| Dehnung bei 23°C (ISO R 527) | = 42% |
| bei -40°C (ISO R 527) | = 150% |
| Shore-Härte A (DIN 53505) | = 45 |
| Thermisch Alterung (300 h/125°C) | |

*) Differential Scanning Calorimeter

(fortgesetzt)

| | |
|---|---|
| $T_g$ | = -47°C |
| Gewichtsverlust | = 1,7% |
| Shore-Härte A | = 47. |

Anwendungsbeispiel

100 g Epoxidharz A und 60 g des flüssigen Epoxidharzhärters gemäss obigem Beispiel werden getrennt auf 60°C erwärmt. Während des anschliessenden Mischens mit einem dynamischen Mischer wird die erhaltene Vergussmasse bei 1 mbar entgast und anschliessend zum Vergiessen eines elektrischen Bauteils, ein Zündgerät für Lampen, verwendet. Die Härtung der Vergussmasse erfolgt 6 h bei 60°C. Das so eingegossene Bauteil besteht folgenden Temperaturwechseltest: 2 h/-40°C ⇆ 2 h/125°C; Anzahl Zyklen: 30.

**Patentansprüche**

**1.** Härtbares Epoxidharzgemisch, enthaltend

a) 40 bis 100 Gew.-% eines epoxidgruppenterminierten Polyesters aus einer dimerisierten oder trimerisierten Fettsäure und einem mehrwertigen Alkohol und 0 bis 60 Gew.-% einer vom epoxidgruppenterminierten Polyester verschiedenen Diepoxidverbindung,
b) ein Epoxidharzhärtungsmittel aus 50 bis 99 Gew.-% eines Polyoxyalkylendi- oder -triamins und 1 bis 50 Gew.-% eines von Polyoxyalkylenaminen verschiedenen Härtungsmittels und gegebenenfalls
c) einen Härtungsbeschleuniger und
d) übliche Zusatzmittel für Giessharze auf Basis von Epoxidharzen, wobei die Summe der Bestandteile sowohl in der Komponenten a) als auch in der Komponente b) jeweils 100 Gew.-% beträgt.

**2.** Epoxidharzgemisch gemäss Anspruch 1, worin die Komponente a) ein epoxidgruppenhaltiges Addukt aus einer Diglycidylverbindung und einem carboxylgruppenterminierten Polyester der Formel I

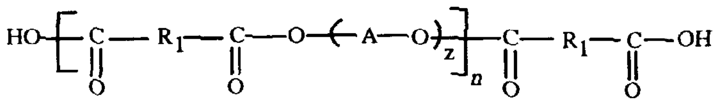 (I),

worin

$R_1$ den Kohlenwasserstoffrest einer ungesättigten oder gesättigten aliphatisch-cycloaliphatischen Dicarbonsäure bedeutet, welche durch Dimerisierung einer ungesättigten monomeren Fettsäure mit 14 bis 24 C-Atomen, vorzugsweise 16 bis 18 C-Atomen, im Molekül und gegebenenfalls anschliessender Hydrierung einer solchen dimerisierten Fettsäure erhalten wurde,
A einen geradkettigen oder verzweigten Alkylenrest mit 2 bis 18 C-Atomen,
z die Zahl 1 oder 2 und
n eine ganze Zahl von 1 bis 20, vorzugsweise 2 bis 6, bedeuten, besteht.

**3.** Epoxidharzgemisch gemäss Anspruch 2, worin die Komponente a) ein epoxidgruppenhaltiges Addukt aus einer Diglycidylverbindung und einem carboxylgruppenterminierten Polyester der Formel I darstellt.

**4.** Epoxidharzgemisch gemäss Anspruch 2, worin die Komponente a) ein epoxidgruppenhaltiges Addukt aus einer Diglycidylverbindung eines zweiwertigen Phenols und einem carboxylgruppenterminierten Polyester der Formel I darstellt.

**5.** Epoxidharzgemisch gemäss Anspruch 1, worin das Polyoxyalkylenamin b) eine Verbindung der Formel III oder IV

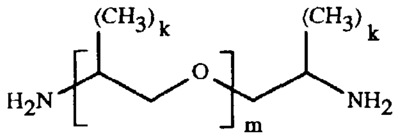

(III)

oder

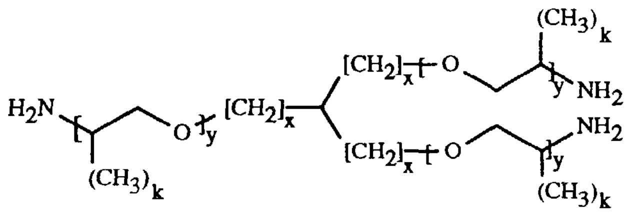

(IV)

darstellt, worin jedes k unabhängig voneinander null oder die Zahl 1 ist, m für eine Zahl von 2 bis 70 steht, jedes x unabhängig voneinander für null oder die Zahl 1 steht und jedes y unabhängig voneinander eine Zahl von 2 bis 50 bedeutet.

**6.** Epoxidharzgemisch gemäss Anspruch 1, worin das Polyoxyalkylenamin b) eine Verbindung Polyoxypropylendiamin der Formel V

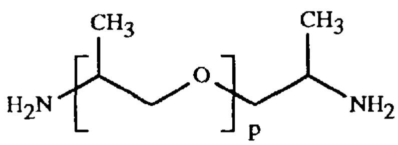

(V)

darstellt, worin p eine Zahl von 6 bis 40 ist.

**7.** Epoxidharzgemisch gemäss Anspruch 1, worin das vom Polyoxyalkylenamin verschiedene Härtungsmittel b) Dicyandiamid, ein anderes Polyamin oder ein Polyol ist.

**8.** Giessharzmasse, bestehend aus dem härtbaren Epoxidharzgemisch gemäss Anspruch 1.

**9.** Verwendung des Epoxidharzgemisches gemäss Anspruch 1 als Giessharzmasse zum Umhüllen von elektrischen oder elektronischen Bauteilen.

Europäisches Patentamt

# EUROPÄISCHER RECHERCHENBERICHT

Nummer der Anmeldung
EP 95 81 0787

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y,D | FR-A-2 017 871 (CIBA S.A.)<br>* Anspruch 1 *<br>* Seite 7, Zeile 30 - Zeile 32 *<br>--- | 1-6,8 | C08G59/12<br>C08L63/00<br>C08L67/00 |
| Y | US-A-4 507 363 (CHOW S.W. ET AL)<br>* Ansprüche 1-6,8 *<br>--- | 1-6,8 | |
| A | US-A-3 816 365 (SCHMIDT R. ET AL)<br>* Anspruch 1 *<br>--- | 1 | |
| A,D | US-A-3 929 717 (LEE S.Y.)<br>* Ansprüche 1,2 *<br>----- | 1,5,6,9 | |

RECHERCHIERTE SACHGEBIETE (Int.Cl.6)
C08G
C08L

Der vorliegende Recherchenbericht wurde für alle Patentansprüche erstellt

| Recherchenort | Abschlußdatum der Recherche | Prüfer |
|---|---|---|
| DEN HAAG | 25.April 1996 | O'Sullivan, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)